(19) Europäisches Patentamt
European Patent Office
Office européen des brevets

(11) **EP 3 198 678 B1**

(12) **EUROPÄISCHE PATENTSCHRIFT**

(45) Veröffentlichungstag und Bekanntmachung des Hinweises auf die Patenterteilung:
**10.11.2021   Patentblatt 2021/45**

(21) Anmeldenummer: **15762540.1**

(22) Anmeldetag: **04.09.2015**

(51) Int Cl.:
*H01Q 1/32* (2006.01)          *G01S 13/931* (2020.01)
*G01S 13/42* (2006.01)          *G01S 13/00* (2006.01)
*G01S 7/03* (2006.01)          *H01Q 21/29* (2006.01)
*H01Q 25/00* (2006.01)          *H01Q 21/22* (2006.01)
*H01Q 21/06* (2006.01)

(86) Internationale Anmeldenummer:
**PCT/EP2015/070200**

(87) Internationale Veröffentlichungsnummer:
**WO 2016/045938 (31.03.2016 Gazette 2016/13)**

(54) **MIMO-RADARVORRICHTUNG ZUM ENTKOPPELTEN BESTIMMEN EINES ELEVATIONSWINKELS UND EINES AZIMUTWINKELS EINES OBJEKTS UND VERFAHREN ZUM BETREIBEN EINER MIMO-RADARVORRICHTUNG**

MIMO RADAR APPARATUS FOR THE DECOUPLED DETERMINATION OF AN ELEVATION ANGLE AND AN AZIMUTH ANGLE OF AN OBJECT, AND METHOD FOR OPERATING A MIMO RADAR APPARATUS

DISPOSITIF RADAR MIMO POUR DÉTERMINER DE FAÇON DÉCOUPLÉE UN ANGLE D'ÉLÉVATION ET UN ANGLE D'AZIMUT D'UN OBJET ET PROCÉDÉ POUR FAIRE FONCTIONNER UN DISPOSITIF RADAR MIMO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2014   DE 102014219113**

(43) Veröffentlichungstag der Anmeldung:
**02.08.2017   Patentblatt 2017/31**

(73) Patentinhaber: **Robert Bosch GmbH**
**70442 Stuttgart (DE)**

(72) Erfinder:
• **LOESCH, Benedikt**
**70195 Stuttgart (DE)**
• **SCHOOR, Michael**
**70195 Stuttgart (DE)**

(56) Entgegenhaltungen:
**EP-A1- 0 947 852          EP-A1- 2 315 311**
**WO-A1-2013/034282          DE-A1-102011 084 610**
**JP-A- 2010 008 319**

• **None**

**Beschreibung**

Die vorliegende Erfindung betrifft eine MIMO-Radarvorrichtung zum entkoppelten Bestimmen eines Elevationswinkels und eines Azimutwinkels eines Objekts und ein Verfahren zum Betreiben der erfindungsgemäßen MIMO-Radarvorrichtung. Die MIMO-Radarvorrichtung kann insbesondere in einem Fahrzeug, etwa einem Straßen-, Schienen-, Luft- oder Wasserfahrzeug, angeordnet sein.

Stand der Technik

MIMO steht im Fachgebrauch für "Multiple Input Multiple Output" und bezeichnet ein System oder Verfahren, gemäß welchem mehrere Sendeantennen und mehrere Empfangsantennen zum Erzielen eines Effekts verwendet werden, beispielsweise zum Übermitteln von Informationen oder, wie im vorliegenden Fall, zum Erfassen zumindest der Lage eines externen Objekts mit einer Radarvorrichtung. Sendeantennen sind insbesondere zum Aussenden eines elektromagnetischen Signals ausgebildet. Empfangsantennen sind insbesondere zum Empfangen eines elektromagnetischen Signals ausgebildet. Wenn hier und im Folgenden von "Antennen" die Rede ist, sollen darunter gleichermaßen, ohne Unterscheidung, Sendeantennen und Empfangsantennen verstanden werden.

In modernen Fahrzeugen werden eine Vielzahl elektronischer Systeme eingesetzt, die z.B. dazu dienen können einen Fahrer beim Führen des Fahrzeugs zu unterstützen. Beispielsweise können Bremsassistenten vorausfahrende Verkehrsteilnehmer erkennen und das Fahrzeug entsprechend abbremsen und beschleunigen, so dass immer ein vorgegebener Mindestabstand zu den vorausfahrenden Verkehrsteilnehmern eingehalten wird. Solche Bremsassistenten können auch eine Notbremsung einleiten, wenn sie erkennen, dass der Abstand zu dem vorausfahrenden Verkehrsteilnehmer zu gering wird.

Um solche Assistenzsysteme in einem Fahrzeug bereitstellen zu können, ist es notwendig, Daten über das Umfeld des jeweiligen Fahrzeugs zu erfassen. Im oben genannten Beispiel eines Bremsassistenten ist es z.B. nötig, die Position eines vorausfahrenden Verkehrsteilnehmers zu erfassen, um den Abstand des Fahrzeugs zu dem vorausfahrenden Verkehrsteilnehmer berechnen zu können.

Bei der Erfassung der Position eines vorausfahrenden Verkehrsteilnehmers kann z.B. der Azimutwinkel des vorausfahrenden Verkehrsteilnehmers ausgehend von der Fahrtrichtung des jeweiligen Fahrzeugs erfasst werden. Der Azimutwinkel ist Teil eines zweckmäßigen, zunächst auf die Radarvorrichtung, bei einer in einem Fahrzeug angeordneten Radarvorrichtung aber entsprechend auf das Fahrzeug bezogenen Kugelkoordinatensystems. Der Azimutwinkel ist bezüglich des Fahrzeugs so angeordnet, dass der Azimutwinkel bei einer Variation von 0° bis 360° eine Ebene parallel zu der Fahrebene überstreicht, welche das Fahrzeug befährt. Mithilfe des Azimutwinkels ist beispielsweise ein Objekt in Vorwärtsfahrtrichtung links von dem Fahrzeug von einem Objekt in Vorwärtsfahrtrichtung rechts von dem Fahrzeug unterscheidbar.

Da auch funktional nicht relevante Objekte wie Gullideckel oder Brücken elektromagnetische Signale als Radarsignale reflektieren, erlaubt die Erfassung des Elevationswinkels eine Unterscheidung zwischen funktional relevanten und nicht relevanten Objekten. Der Elevationswinkel ist ein weiterer Teil des beschriebenen Kugelkoordinatensystems und überstreicht bei einer Variation von 0° bis 360° eine Ebene, welche senkrecht auf der Fahrbahn steht, welche das Fahrzeug befährt. Die letzte unabhängige Koordinate des beschriebenen Kugelkoordinatensystems ist der Abstand, oder Radius.

Eine Erfassung des Azimutwinkels bzw. des Elevationswinkels eines Objekts kann z.B. durch Auswertung der elektromagnetischen Phasenversätze und/oder Amplituden an den Empfangsantennen einer Radarvorrichtung empfangener, an dem Objekt reflektierter elektromagnetischer Signale erfolgen.

Die US 2012/256795 A1 zeigt eine mögliche Antenne für eine solche Radarvorrichtung.

In der WO 2013/034282 A1 ist ein abbildender Radarsensor mit einer synthetischen Vergrößerung der Antennenöffnung und zweidimensionaler Strahlschwenkung beschrieben.

In der DE 10 2011 084 610 A1 ist ein winkelauflösender Radarsensor beschrieben.

In der EP 2 315 311 A1 ist ein Ultra-Breitband-Radarabbildungssystem beschrieben, welches ein zweidimensionales MIMO-Sende/Empfangs-Array verwendet.

In der EP 0 947 852 A1 ist eine Radarvorrichtung mit vertikal teilweise verschobenen Empfangsantennenelementen beschrieben.

In der D5 JP 2010 008319 A sind eine Radarantenne und ein Radarsystem beschrieben.

Für ein zweidimensionales Antennenarray mit Phasenzentren xi in einer ersten Koordinatenrichtung und yi in einer zweiten, dazu senkrechten Koordinatenrichtung, gilt für die Phase $\varphi$i an Antenne i:

$$\varphi i = \frac{2\pi}{\lambda}\,(xi * \sin\theta * \cos\Phi + yi * \sin\Phi)$$

Dabei stellt $\theta$ den Azimutwinkel und $\Phi$ den Elevationswinkel dar.

Bei einem allgemeinen zweidimensionalen Antennenarray müssen Azimutwinkel und Elevationswinkel gemeinsam berechnet werden. Dadurch steigt der Rechenaufwand stark an. Es ist daher wünschenswert, die Berechnung von Azimutwinkel und Elevationswinkel zu entkoppeln.

Weiterhin ist es wünschenswert, mit einer möglichst geringen Anzahl an Antennen, d.h. Sende- und Empfangsantennen, des Antennenarrays der MIMO-Radarvorrichtung auszukommen. Die Anwendung des bekannten MIMO-Prinzips kombiniert Empfangssignale mehrerer Schaltzustände und erlaubt so die Bildung virtueller Arrays mit vergrößerter Apertur einer hohen Anzahl virtueller Antennen.

Die Bildung der virtuellen Arrays $\underline{av}(\theta)$ erfolgt durch Faltung des Empfangsantennenarrays, welches aus den Empfangsantennen besteht, mit dem Sendeantennenarray, welches aus den Sendeantennen besteht, d.h. durch Bilden aller möglichen Produkte der Einwegeantennendiagramme $\underline{atx}(\theta)$ der Sendeantennen mit den Einwegeantennendiagrammen $\underline{arx}(\theta)$ der Empfangsantennen:

$$\underline{av}(\theta) = \underline{atx}(\theta) \otimes \underline{arx}(\theta),$$

wobei $\otimes$ das Kroneckerprodukt symbolisiert, d.h. alle möglichen Produkte der Elemente der Vektoren $\underline{atx}(\theta)$ und $\underline{arx}(\theta)$ bildet.

Relativ zu der Radarvorrichtung bewegte Objekte führen bei Zeitmultiplex-MIMO zu einem Phasenversatz zwischen Sendezuständen, weshalb Kompensationsverfahren für ein Kompensieren des Phasenversatzes Anwendung finden.

Offenbarung der Erfindung

Die vorliegende Erfindung offenbart eine MIMO-Radarvorrichtung mit den Merkmalen des Patentanspruchs 1 und ein Verfahren mit den Merkmalen des Patentanspruchs 8.

Somit schafft die Erfindung eine MIMO-Radarvorrichtung zum entkoppelten Bestimmen eines Elevationswinkels und eines Azimutwinkels eines Objekts.

Unter einem Phasenzentrum ist der elektronische Referenzpunkt einer Antenne zu verstehen, das heißt, vom Empfangsort aus betrachtet scheint die elektromagnetische Antennenstrahlung der entsprechenden Antenne von diesem Referenzpunkt auszugehen.

Weiterhin schafft die Erfindung ein Verfahren zum Betreiben der erfindungsgemäßen MIMO-Radarvorrichtung mit den Schritten: Aussenden von elektromagnetischen Signalen mittels der Sendeantennen; Empfangen von an dem Objekt reflektierten elektromagnetischen Signalen mittels der Empfangsantennen; Erfassen von virtuellen Phasenzentren der empfangenen reflektierten elektromagnetischen Signale; Auswerten der empfangenen reflektierten elektromagnetischen Signale zum Bestimmen des Azimutwinkels des Objekts basierend zumindest auf elektromagnetischen Phasenversätzen zwischen einer ersten Auswahl aus den erfassten virtuellen Phasenzentren; und Auswerten der empfangenen reflektierten elektromagnetischen Signale zum Bestimmen des Elevationswinkels des Objekts basierend zumindest auf elektromagnetischen Phasensätzen zwischen einer zweiten Auswahl aus den erfassten virtuellen Phasenzentren.

Vorteile der Erfindung

Die der vorliegenden Erfindung zu Grunde liegende Erkenntnis besteht darin, dass durch eine geschickt gewählte Anordnung der Sende- und Empfangsantennen des Antennenarrays einer MIMO-Radarvorrichtung bei gleichbleibender Anzahl von Antennen eine verbesserte Auswertung der empfangenen elektromagnetischen Signale möglich ist.

Die der vorliegenden Erfindung zu Grunde liegende Idee besteht nun darin, dieser Erkenntnis Rechnung zu tragen und eine entsprechende Antennenanordnung mit in zwei Koordinatenrichtung beabstandet angeordneten Antennen sowie ein Verfahren zum Betreiben dieser Antennenanordnung bereitzustellen.

Erfindungsgemäß kann eine Azimutwinkelschätzung mit verbesserter Genauigkeit und eine Elevationswinkelschätzung mit einem Gütewert durchgeführt werden. Dadurch, dass zumindest eine der Sendeantennen und zumindest eine der Empfangsantennen gegenüber den anderen Sende- bzw. Empfangsantennen entlang der zweiten Koordinatenrichtung jeweils um denselben Versatzwert beabstandet ist, ergeben sich in dem virtuellen Array mehrere parallele Linien von virtuellen Phasenzentren. Es können beispielsweise sämtliche virtuellen Phasenzentren innerhalb einer parallelen Linie für die Berechnung des Azimutwinkels verwendet werden, während jeweils ein oder mehrere virtuelle Phasenzentren aus verschiedenen parallelen Linien für die Berechnung des Elevationswinkels verwendet werden.

Die erfindungsgemäße Antennenanordnung kann vorteilhafterweise genau drei Sendeantennen und genau vier Empfangsantennen aufweisen. Die Antennenanordnung kann vorteilhafterweise in einer monolithischen Mikrowellenschaltung (engl. "monolithic microwave integrated circuit") ausgebildet sein. Hierdurch kann sich eine besonders geringe Baugröße ergeben.

Weiterhin können die Sendeantennen voneinander verschiedene Sichtbereiche aufweisen, sodass die Radarvorrichtung sowohl in einem Fernfeldmodus mit einem schmalen Öffnungswinkel als auch in einem Nahfeldmodus mit einem breiten Öffnungswinkel betrieben werden kann.

Der Versatzwert, um welchen die Antennen teilweise voneinander entlang der zweiten Koordinatenrichtung versetzt angeordnet sind, ist vorzugsweise basierend auf der Wellenlänge $\lambda$ der mittels der Sendeantennen auszusendenden und mittels der Empfangsantennen zu empfangenden elektromagnetischen Signale, sowie auf einem Elevationswinkelbereich von $-\beta$ bis $+\beta$, innerhalb welchem Objekte erfassbar sein sollen, gewählt. Beispielsweise kann der Versatzwert zwischen einer halben und drei Wellenlängen $\lambda$, vorzugsweise zwischen eineinhalb und zwei Wellenlängen $\lambda$ betragen. Der Versatzwert kann beispielsweise auch $0.5/\sin(\beta)\,\lambda$ betragen.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist jede der Sendeantennen von jeder anderen der Sendeantennen entlang der zweiten Koordinatenrichtung entweder nicht oder um den Versatzwert beabstandet. Gemäß einer weiteren bevorzugten Weiterbildung ist jede der Empfangsantennen von jeder anderen der Empfangsantennen entlang der zweiten Koordinatenrichtung entweder nicht oder um den Versatzwert beabstandet. Hierdurch ist die Anordnung der virtuellen Phasenzentren in dem virtuellen Array zum präziseren Bestimmen des Elevations- und des Azimutwinkels vorteilhaft.

Gemäß einer weiteren bevorzugten Weiterbildung ist das Phasenzentrum einer zwischen einer ersten und einer dritten Sendeantenne angeordneten zweiten Sendeantenne von den Phasenzentren der der ersten und der dritten Sendeantenne entlang der zweiten Koordinatenrichtung um den Versatzwert beabstandet. Gemäß der Erfindung ist das Phasenzentrum einer entlang der ersten Koordinatenrichtung zwischen einer ersten und einer vierten Empfangsantenne angeordneten zweiten Empfangsantenne von den Phasenzentren der ersten und der vierten Empfangsantenne entlang der zweiten Koordinatenrichtung um den Versatzwert beabstandet. Gemäß einer weiteren bevorzugten Weiterbildung ist das Phasenzentrum einer entlang der ersten Koordinatenrichtung zwischen der zweiten und der vierten Empfangsantenne angeordneten dritten Empfangsantenne von den Phasenzentren der ersten und der vierten Sendeantenne entlang der zweiten Koordinatenrichtung um den Versatzwert beabstandet. Durch die Erfindung und diese Weiterbildungen ist die Anordnung der virtuellen Phasenzentren in dem virtuellen Array zum präziseren Bestimmen des Elevations- und des Azimutwinkels vorteilhaft.

Gemäß einer weiteren bevorzugten Weiterbildung sind die Sendeantennen und/oder die Empfangsantennen als Patch-Antennen mit matrixartig angeordneten Spalten von Patchelementen ausgebildet, wobei die Spalten entlang der zweiten Koordinatenrichtung ausgerichtet sind und jeweils mehr Patchelemente aufweisen als die entsprechende Patch-Antenne Spalten aufweist Gemäß einer bevorzugten Weiterbildung umfasst das erfindungsgemäße Verfahren die Schritte: Berechnen einer ersten Deterministic-Maximum-Likelihood-Funktion, DML-Funktion, für eine erste Untermenge der ersten Auswahl aus den erfassten virtuellen Phasenzentren; Berechnen mindestens einer zweiten DML-Funktion für eine zweite Untermenge der ersten Auswahl aus den erfassten virtuellen Phasenzentren; und Berechnen einer DML-Summenfunktion durch vorteilhaft gewichtetes Summieren der ersten DML-Funktion und der zweiten DML-Funktion; wobei das Auswerten der empfangenen reflektierten elektromagnetischen Signale zum Bestimmen des Azimutwinkels basierend auf der DML-Summenfunktion erfolgt.

Eine DML-Funktion stellt eine winkelabhängige Korrelation zwischen den an einem virtuellen MIMO-Array empfangenen elektromagnetischen Signalen und für das jeweilige virtuelle Array für jeden Winkel vorbestimmten und gespeicherten Antennendiagrammen dar. Der Funktionswert der DML-Funktion liegt für jeden Winkel zwischen 0 (keine Korrelation) und 1 (völlige Übereinstimmung); für die DML-Summenfunktion können die Funktionswerte höher liegen.

Kurze Beschreibung der Figuren

Die vorliegende Erfindung wird nachfolgend anhand der in den schematischen Figuren der Zeichnungen dargestellten Ausführungsbeispiele näher erläutert. Es zeigen:

Fig. 1    ein schematisches Blockschaltbild einer MIMO-Radarvorrichtung zum entkoppelten Bestimmen eines Elevationswinkels und eines Azimutwinkels eines Objekts gemäß einer ersten Ausführungsform der vorliegenden Erfindung;

Fig. 2A    eine schematische Darstellung in Draufsicht auf ein Antennenarray einer MIMO-Radarvorrichtung gemäß einer ersten Ausführungsform der vorliegenden Erfindung;

Fig. 2B    eine schematische Darstellung virtueller Phasenzentren, welche sich bei Verwendung des Antennenarrays der MIMO-Radarvorrichtung gemäß der ersten Ausführungsform der vorliegenden Erfindung ergeben;

Fig. 3A    eine schematische Darstellung in Draufsicht auf ein Antennenarray einer MIMO-Radarvorrichtung gemäß einer zweiten Ausführungsform der vorliegenden Erfindung;

Fig. 3B    eine schematische Darstellung virtueller Phasenzentren, welche sich bei

Fig. 4    Verwendung des Antennenarrays der MIMO-Radarvorrichtung gemäß der zweiten Ausführungsform der vorliegenden Erfindung ergeben; eine schematische Darstellung in Draufsicht auf ein Antennenarray einer MIMO-Radarvorrichtung gemäß einer dritten Ausführungsform der vorliegenden Erfindung; und

Fig. 5    ein schematisches Flussdiagramm zum Erläutern eines Verfahrens gemäß einer vierten Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen.

Detaillierte Beschreibung der Ausführungsbeispiele

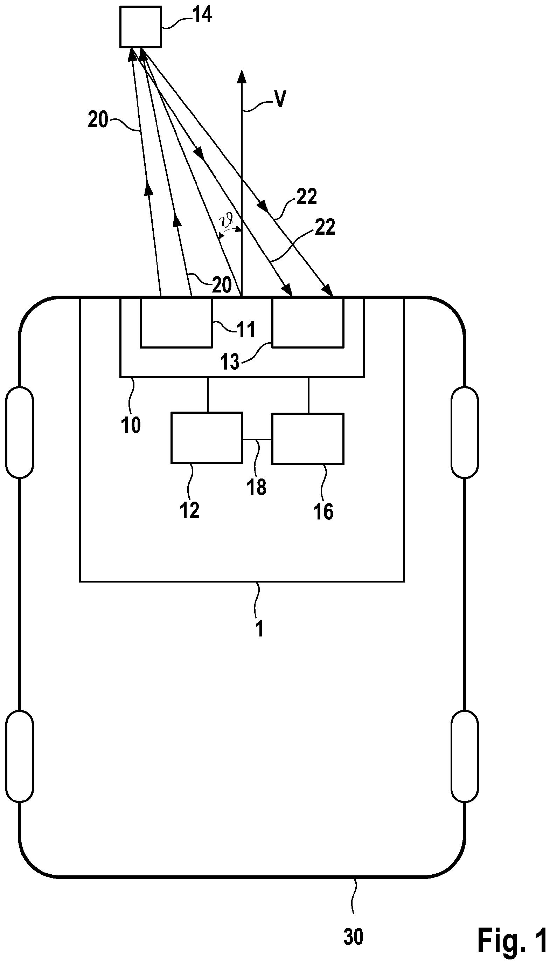

Fig. 1 zeigt ein schematisches Blockschaltbild einer MIMO-Radarvorrichtung 1 zum entkoppelten Bestimmen eines Elevationswinkels und eines Azimutwinkels θ eines Objekts 14 gemäß einer ersten Ausführungsform der vorliegenden Erfindung.

Gemäß Fig. 1 ist die MIMO-Radarvorrichtung 1 in einem Fahrzeug 30 ausgebildet. Die Radarvorrichtung 1 umfasst ein planares Antennenarray 10, eine Auswerteeinrichtung 12 und eine Steuereinrichtung 16. Das planare Antennenarray umfasst ein Empfangsarray 13 aus mehreren Empfangsantennen sowie ein Sendearray 11 aus mehreren Sendeantennen. Mittels der Sendeantennen sind elektromagnetische Signale 20 aus der Radarvorrichtung 1 aussendbar. Die ausgesendeten elektromagnetischen Signale 20 können beispielsweise an einem externen Objekt 14 reflektiert werden, wodurch reflektierte elektromagnetische Signale 22 entstehen. Die reflektierten elektromagnetischen Signale 22 sind mittels der Empfangsantennen des Empfangsarrays 13 empfangbar und mittels der Auswerteeinrichtung 12 zum entkoppelten Bestimmen des Elevationswinkels und des Azimutwinkels 9 des Objekts 14 auswertbar. Der Azimutwinkel θ und der Elevationswinkel sind bezogen auf die Radarvorrichtung 1 definiert. Vorteilhafterweise, wenn die Radarvorrichtung 1 in einem Fahrzeug 30 angeordnet ist, wird der Azimutwinkel θ in Bezug auf die Vorwärtsfahrtrichtung V des Fahrzeugs 30 mit dem Fußpunkt der Vorwärtsfahrtrichtung V auf dem Fahrzeug 30 als Scheitelpunkt und mit einem überstrichenen Winkelsektor parallel zu einer Fahrebene des Fahrzeugs 30 gemessen.

Das Aussenden der elektromagnetischen Signale 20 wird mittels der Steuereinrichtung 16 gesteuert, welche über Datenleitungen 18 mit der Auswerteeinrichtung 12 verbunden sein kann, so dass von der Steuereinrichtung 16 bereitgestellte Parameter über Phasenabstände, Sendezeitpunkte, Signalrampen etc. der ausgesendeten elektromagnetischen Signale 20 von der Auswerteeinrichtung 12 berücksichtigbar sind.

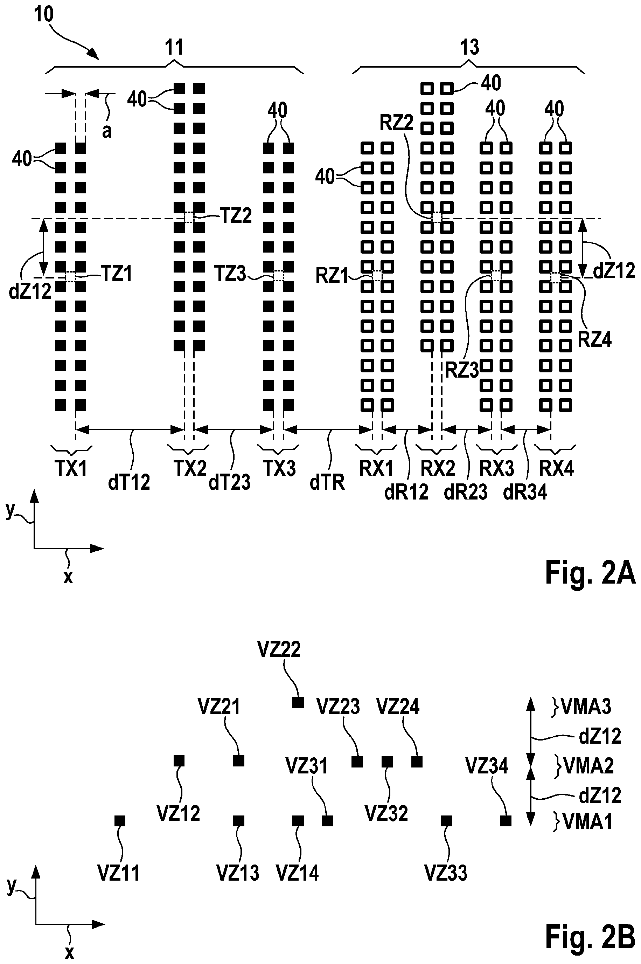

Das Antennenarray 10 gemäß der ersten Ausführungsform der vorliegenden Erfindung sowie ein Antennenarray 10' gemäß einer zweiten Ausführungsform der vorliegenden Erfindung und ein Antennenarray 10" gemäß einer dritten Ausführungsform der vorliegenden Erfindung werden im Folgenden anhand der Figuren 2A bis 3B genauer beschrieben.

Fig. 2A zeigt eine schematische Darstellung in Draufsicht auf ein Antennenarray 10 einer MIMO-Radarvorrichtung gemäß der ersten Ausführungsform der vorliegenden Erfindung.

Ein Sendearray 11 des Antennenarrays 10 weist eine erste Sendeantenne TX1 mit einem Phasenzentrum TZ1, eine zweite Sendeantenne TX2 mit einem Phasenzentrum TZ2 und eine dritte Sendeantenne TX3 mit einem dritten Phasenzentrum TZ3 auf. Alle Sendeantennen TXi, wobei "i" als Platzhalter für die Ziffern von 1-3 steht, sind als formgleiche Patch-Antennen ausgebildet, welche jeweils zwei Spalten mit wiederum jeweils vierzehn quadratischen Patch-Elementen 40 aufweisen. Die einzelnen Patch-Elemente können beispielsweise als Kupferflächen auf einer Leiterplatte oder stabförmig oder dergleichen ausgebildet sein. Die Patch-Elemente 40 können jeweils von benachbarten Patch-Elementen 40 um eine Kantenlänge a eines Patch-Elements beabstandet sein.

Die Sendeantennen TXi sind entlang einer ersten Koordinatenrichtung x voneinander beabstandet. Ist das Antennenarray 10 beispielsweise an einer Frontseite eines Fahrzeugs 30 angeordnet, ist die erste Richtung x vorzugsweise parallel zu der Fahrebene des Fahrzeugs 30 und senkrecht zu der Vorwärtsfahrtrichtung V des Fahrzeugs 30 und ist somit als "horizontal" bezeichenbar. Die Spalten der Sendeantennen TXi sind entlang einer zweiten Koordinatenrichtung y ausgerichtet, welche senkrecht auf der ersten Koordinatenrichtung steht. In dem Beispiel der an der Frontseite des Fahrzeugs 30 angeordneten Antennenarrays 10 steht die zweite Koordinatenrichtung y senkrecht sowohl auf der Fahrebene als auch auf der Vorwärtsfahrtrichtung V des Fahrzeugs 30 und ist somit als "vertikal" bezeichenbar.

Gemäß der ersten Ausführungsform ist die zweite Sendeantenne TX2 entlang der ersten Koordinatenrichtung x zwischen der ersten Sendeantenne TX1 und der dritten Sendeantenne TX3 angeordnet. Ein erster Abstand dT12 zwischen der ersten und der zweiten Sendeantenne TX1, TX2 entlang der ersten Koordinatenrichtung x ist größer als ein zweiter Abstand dT23 entlang der ersten Koordinatenrichtung x zwischen der zweiten und der dritten Sendeantenne TX2, TX3. Abstände zwischen Antennen TXi, RXj entlang der ersten Koordinatenrichtung x sind hier und im Folgenden stets zwischen den jeweiligen Phasenzentren TZi, RZj gemessen, wobei "i" und "j" wie im Falle der Antennen TXi, TXj als Platzhalter fungieren.

Beispielsweise beträgt der erste Abstand dT12 elf Kantenlängen der quadratischen Patch-Elemente 40 und der zweite Abstand dT23 acht Kantenlängen, wobei jede der Sendeantennen TXi entlang der ersten Richtung x drei Kantenlängen a breit ist. Die zweite Sendeantenne TX2 ist im Vergleich zu der ersten Sendeantenne TX1 entlang der zweiten Koordinatenrichtung y um einen Versatzwert dZ12 verschoben. Mit anderen Worten ist das Phasenzentrum TZ2 der zweiten Sendeantenne TX2 von dem Phasenzentrum TZ1 der ersten Sendeantenne TX1 entlang der zweiten Koordinatenrichtung y um den Versatzwert dZ12 beabstandet, gemäß Fig. 2A um sechs Kantenlängen a. Das Phasenzentrum TZ3 der dritten Sendeantenne TX3 ist entlang der zweiten Koordinatenrichtung y nicht von dem Phasenzentrum TZ1 der ersten Sendeantenne TX1 beabstandet. Die dritte Sendeantenne TX3 schließt somit, entlang der zweiten Koordinatenrichtung y, bündig mit der ersten Sendeantenne TX1 ab.

Das Empfangsarray 13 des Antennenarrays 10 weist eine erste, zweite, dritte und vierte Empfangsantenne RX1, RX2, RX3, RX4 mit jeweils entsprechenden Phasenzentren RZ1, RZ2, RZ3, RZ4 auf. Alle Empfangsantennen RXj, wobei „j" als Platzhalter für die Ziffern von 1 bis 4 steht, sind als formgleiche Patch-Antennen ausgebildet, welche jeweils zwei Spalten mit wiederum jeweils vierzehn der quadratischen Patch-Elemente 40 aufweisen. Die der dritten Sendeantenne TX3 entlang der ersten Koordinatenrichtung x am nächsten gelegene, erste Empfangsantenne RX1 ist von dieser entlang der ersten Koordinatenrichtung um einen Array-Abstandswert dTR beabstandet, etwa um neun Kantenlängen a.

Die Empfangsantennen RXj sind entlang der ersten Koordinatenrichtung x voneinander beabstandet. Die Spalten der Empfangsantennen RXj sind entlang der zweiten Koordinatenrichtung y ausgerichtet.

Gemäß der ersten Ausführungsform ist die zweite Empfangsantenne RX2 entlang der ersten Richtung x zwischen der ersten Empfangsantenne RX1 und der dritten Sendeantenne RX3 angeordnet. Die dritte Empfangsantenne RX3 ist entlang der ersten Richtung x zwischen der zweiten Empfangsantenne RX2 und der vierten Sendeantenne RX4 angeordnet. Ein vierter Abstand dR12 zwischen der ersten und der zweiten Empfangsantenne RX1, RX2, ein fünfter Abstand dR23 zwischen der zweiten und der dritten Empfangsantenne RX2, RX3 und ein sechster Abstand dR34 zwischen der dritten und der vierten Empfangsantenne RX3, RX4, jeweils entlang der ersten Koordinatenrichtung x, sind gleich groß und betragen beispielsweise fünf Kantenlängen a.

Die zweite Empfangsantenne RX2 ist im Vergleich zu der ersten Empfangsantenne RX1 sowie der dritten und der vierten Empfangsantenne RX3, RX4 entlang der zweiten Koordinatenrichtung y um einen siebten Abstand dRZ12 verschoben. Mit anderen Worten ist das Phasenzentrum RZ2 der zweiten Empfangsantenne RX2 sowohl von den Phasenzentren RZ1, RZ3, RZ4 der ersten, dritten und vierten Empfangsantenne RX1, RX3, RX4 als auch von den Phasenzentren TZ1, TZ3 der ersten und dritten Sendeantenne TX1, TX3 um den Versatzwert dZ12 beabstandet, gemäß Fig. 2A um sechs Kantenlängen a. Die Phasenzentren RZ3, RZ4 der dritten und vierten Empfangsantenne RX3, RX4 sowie das Phasenzentrum TZ3 der dritten Sendeantenne TX3 sind entlang der zweiten Koordinatenrichtung y nicht von dem Phasenzentrum TZ1 der ersten Sendeantenne TX1 beabstandet, das heißt, sie liegen auf einer Linie parallel zu der ersten Koordinatenrichtung x. Die dritte und die vierte Empfangsantenne RX3, RX4 schließen somit entlang der zweiten Koordinatenrichtung y bündig mit der ersten Sendeantenne TX1 ab.

Fig. 2B zeigt eine schematische Darstellung virtueller Phasenzentren VZij, welche sich bei Verwendung des Antennenarrays 10 der MIMO-Radarvorrichtung gemäß der ersten Ausführungsform der vorliegenden Erfindung ergeben.

Die virtuellen Phasenzentren VZij, wobei "i" und „j" Platzhalter für Ziffern sind, entstehen, wie oben beschrieben, durch Faltung der tatsächlichen Phasenzentren TZi der Sendeantennen TXi mit den tatsächlichen Phasenzentren RZj der Empfangsantennen RXj. Die virtuellen Phasenzentren VZij sind gemäß ihrer Lage bezüglich der zweiten Koordinatenrichtung y in drei virtuelle MIMO-Arrays VMA1, VMA2, VMA3 einteilbar. Beispielsweise umfasst ein erstes virtuelles MIMO-Array VMA1 die virtuellen Phasenzentren VZ11, VZ13, VZ14, VZ31, VZ33 und VZ34, welche durch Kombination der tatsächlichen Phasenzentren TZ1 und TZ3 der ersten und zweiten Sendeantennen TX1, TX3 mit den tatsächlichen Phasenzentren RZ1, RZ3, RZ4 der Empfangsantennen RX1, RX3 und RX4 entstehen. Ein zweites virtuelles MIMO-Array VMA2 umfasst die virtuellen Phasenzentren VZ12, VZ21, VZ23, VZ32 und VZ24. Ein drittes virtuelles MIMO-Array VMA3 umfasst nur das virtuelle Phasenzentrum VZ22. Das erste und das zweite virtuelle MIMO-Array VMA1, VMA2 sind voneinander entlang der zweiten Koordinatenrichtung y um den Versatzwert beabstandet, ebenso wie das zweite und das dritte virtuelle MIMO-Array VMA2, VMA3. Jedes virtuelle MIMO-Array VMA1, VMA2, VMA3 liegt auf einer Linie, welche zu der der jeweils anderen virtuellen MIMO-Arrays VMA1, VMA2, VMA3 parallel ist.

Zum Bestimmen des Azimutwinkels wird für das erste virtuelle MIMO-Array VMA1 eine erste Deterministic-Maximum-Likelihood-Funktion (DML) in Abhängigkeit von dem Azimutwinkel erstellt. Eine DML-Funktion stellt eine winkelabhängige Korrelation zwischen den an einem virtuellen MIMO-Array empfangenen elektromagnetischen Signalen 22 und für das jeweilige virtuelle Array für jeden Winkel vorbestimmten und gespeicherten Antennendiagrammen dar. Weiterhin wird für das zweite virtuelle MIMO-Array VMA2 eine zweite DML-Funktion in Abhängigkeit von dem Azimutwinkel erstellt. Die erste und die zweite DML-Funktion werden zum Bilden einer DML-Summenfunktion gewichtet addiert. Der Wert, für welchen die DML-Summenfunktion die größte Korrelation aufweist, wird als der Azimutwinkel bestimmt.

Zum Bestimmen des Elevationswinkels wird eine dritte DML-Funktion in Abhängigkeit von dem Elevationswinkel für die virtuellen Phasenzentren VZ21, VZ22, VZ31 und VZ23 bestimmt und der Wert, für welchen die dritte DML-Funktion die größte Korrelation aufweist, als Elevationswinkel bestimmt. In diese Bestimmung kann der zuvor berechnete Azimutwinkel einfließen, um die jeweilige Azimutwinkelabhängigkeit der virtuellen Phasenzentren VZ21, VZ22, VZ31 und VZ23 zu kompensieren.

Der Versatz der Antennen entlang der ersten Koordinatenrichtung x hat den Vorteil, dass ein hoher Antennengewinn in Elevationsrichtung erzielt werden kann ohne den Abstand der Antennen entlang der zweiten Koordinatenrichtung y und damit den maximalen Eindeutigkeitsbereich der Elevationswinkelschätzung einzuschränken. Weiterhin erlaubt der Versatz der Antennen entlang der ersten Koordinatenrichtung x im Fall von zwei zu erfassenden Objekten mit jeweils zu bestimmendem Elevations- und Azimutwinkel eine automatische Zuordnung zwischen Azimut- und Elevationswinkel jedes Objekts.

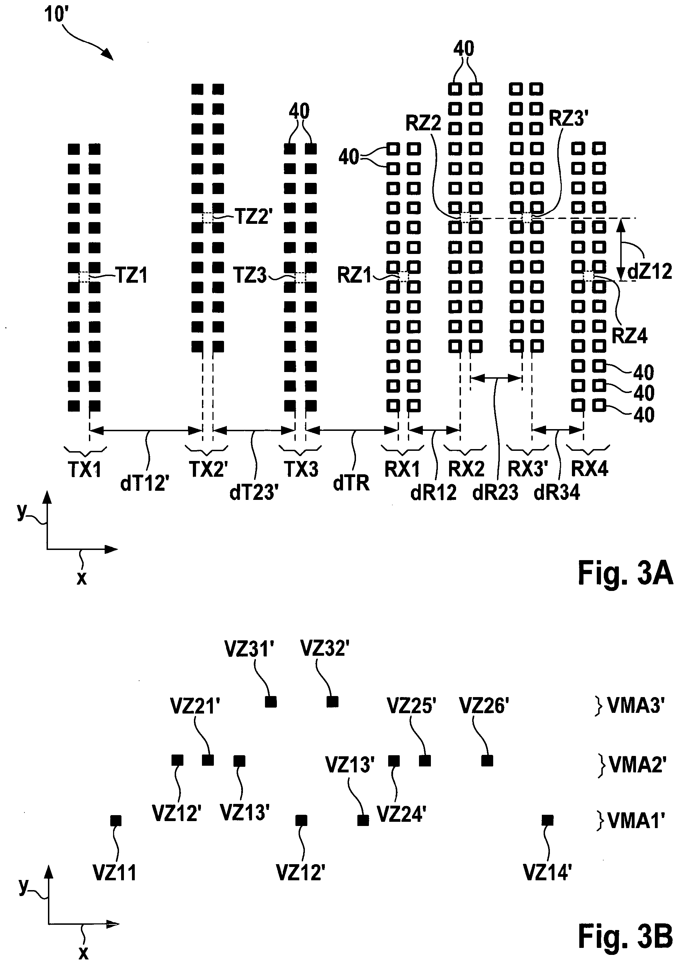

Fig. 3A zeigt eine schematische Darstellung in Draufsicht auf ein Antennenarray 10' einer MIMO-Radarvorrichtung gemäß einer zweiten Ausführungsform der vorliegenden Erfindung.

Das Antennenarray 10' der MIMO-Radarvorrichtung gemäß der zweiten Ausführungsform ist eine Variante des Antennenarrays 10 der MIMO-Radarvorrichtung gemäß der ersten Ausführungsform und unterscheidet sich von dieser in der Anordnung der zweiten Sendeantenne TX2' sowie der dritten Empfangsantenne RX3': der erste Abstand dT12' zwischen der ersten und der zweiten Sendeantenne TX1, TX2' entlang der ersten Koordinatenrichtung x ist gleich dem zweiten Abstand dT23' entlang der ersten Koordinatenrichtung x zwischen der zweiten und der dritten Sendeantenne TX2', TX3, nämlich acht Kantenlängen a.

Die dritte Empfangsantenne RX3' ist im Vergleich zu der ersten Empfangsantenne RX1 sowie der vierten Empfangsantenne RX3, RX4 entlang der zweiten Koordinatenrichtung y um den Versatzwert dZ12 verschoben. Die Phasenzentren RZ2, RZ3' der zweiten und dritten Empfangsantenne RX2, RX3' sind entlang der zweiten Koordinatenrichtung y nicht von dem Phasenzentrum TZ2' der zweiten Sendeantenne TX2' beabstandet. Die Phasenzentren RZ1, RZ4 der ersten und vierten Empfangsantenne RX1, RX4 sind entlang der zweiten Koordinatenrichtung y nicht von den Phasenzentren TZ1', TZ3' der ersten und der dritten Sendeantenne TX1, TX3 beabstandet.

Fig. 3B zeigt eine schematische Darstellung virtueller Phasenzentren VZij', welche sich bei Verwendung des Antennenarrays 10 der MIMO-Radarvorrichtung gemäß der ersten Ausführungsform der vorliegenden Erfindung ergeben können. Das Bestimmen des Elevations- und des Azimutwinkels können analog wie oben in Bezug auf die erste Ausführungsform beschrieben erfolgen.

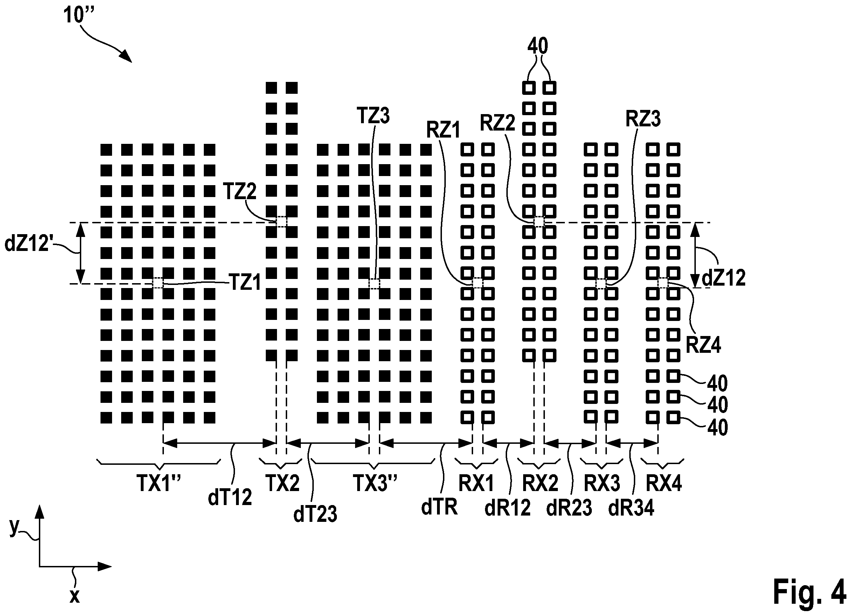

Fig. 4 zeigt eine schematische Darstellung in Draufsicht auf ein Antennenarray 10" einer MIMO-Radarvorrichtung gemäß einer dritten Ausführungsform der vorliegenden Erfindung. Das Antennenarray 10" der MIMO-Radarvorrichtung gemäß der dritten Ausführungsform ist eine Variante des Antennenarrays 10 der MIMO-Radarvorrichtung gemäß der ersten Ausführungsform und unterscheidet sich von dieser in der Form der ersten und dritten Sendeantenne TX1", TX3".

Statt wie die übrigen Sende- und Empfangsantennen TX2, RXj, sind die erste und die dritte Sendeantenne TX1", TX3" als Patch-Antennen mit jeweils sechs Spalten von je vierzehn Patchelementen 40 ausgebildet. Dadurch weisen die erste und die dritte Sendeantenne TX1", TX3" einen schmalen Sichtbereich auf, während die zweite Sendeantenne TX2 einen breiten Sichtbereich aufweist.

Die virtuellen Phasenzentren VZij gemäß der dritten Ausführungsform entsprechen den in Fig. 2B dargestellten virtuellen Phasenzentren VZij. Wird ein Objekt nur in dem breiten Sichtbereich der zweiten Sendeantenne TX2 erfasst, aber nicht im schmaleren Sichtbereich der ersten oder der dritten Sendeantenne TX1", TX3", werden zum Bestimmen des Azimut- und des Elevationswinkels lediglich die virtuellen Phasenzentren VZ21, VZ22, VZ23 und VZ24 verwendet.

Eine Zwei-Objekt-Azimutwinkelschätzung in dem breiten Sichtbereich der zweiten Sendeantenne TX2 ist jedoch weiterhin möglich, sofern sich mindestens eines der beiden Objekte in dem schmalen Sichtbereich der ersten oder der dritten Sendeantenne TX1", TX3" befindet. Liegen hingegen beide Objekte außerhalb der Sichtbereich der ersten und der dritten Sendeantenne TX1", TX3", das heißt üblicherweise bei betragsmäßig großen Winkeln, kann eine Trennung der Ziele über Abstand- und/oder Dopplerauflösung der Modulation erfolgen.

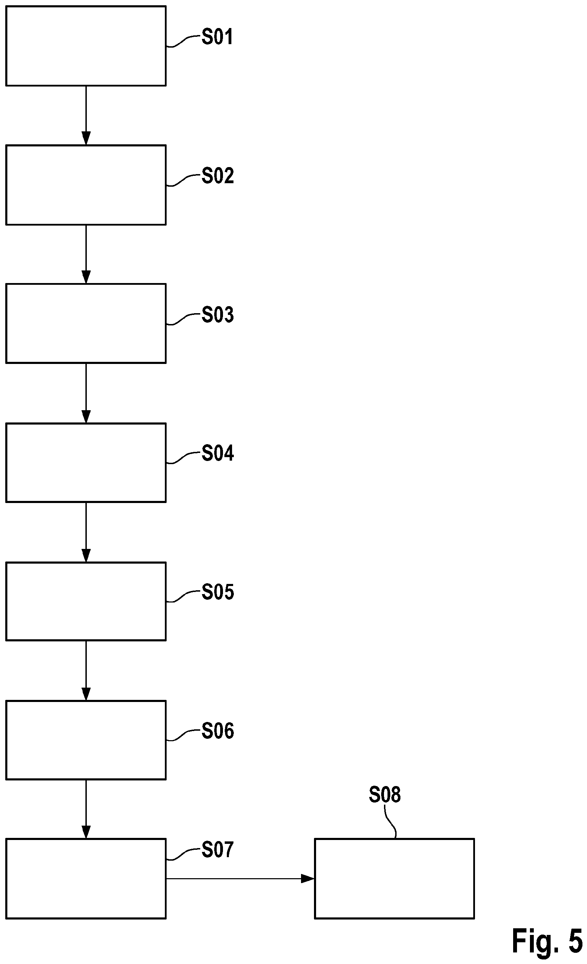

Fig. 5 zeigt ein schematisches Flussdiagramm zum Erläutern eines Verfahrens gemäß einer vierten Ausführungsform der vorliegenden Erfindung. Das Verfahren gemäß der vierten Ausführungsform und Variationen davon sind zum Betreiben der erfindungsgemäßen MIMO-Radarvorrichtung geeignet und gemäß den Weiterbildungen und Variationen der MIMO-Radarvorrichtung anpassbar. Für Details zu den Schritten des Verfahrens wird auf die vorangehende Beschreibung insbesondere der Antennenarrays 10; 10', 10" verwiesen.

In einem Schritt S01 werden mittels der Sendeantennen TX1, TX2, TX3; TX1, TX2', TX3; TX1", TX2, TX3" elektromagnetische Signale 20 ausgesendet. In einem Schritt S02 werden an dem Objekt 14 reflektierte elektromagnetische Signalen 22 mittels der Empfangsantennen RX1, RX2, RX3, RX4; RX1, RX2, RX3', RX4 empfangen.

In einem Schritt S03 werden virtuelle Phasenzentren VZ der empfangenen reflektierten elektromagnetischen Signale 22 erfasst.

In einem Schritt S04 werden die empfangenen reflektierten elektromagnetischen Signale 22 zum Bestimmen des Azimutwinkels des Objekts 14 basierend zumindest auf elektromagnetischen Phasenversätzen zwischen einer ersten Auswahl aus den erfassten virtuellen Phasenzentren VZ ausgewertet. Bei der ersten Auswahl kann es sich insbesondere, wie oben im Text beschrieben, um solche virtuellen Phasenzentren VZ handeln, welche in dem virtuellen Array entlang einer, insbesondere mehreren virtuellen Geraden angeordnet sind, insbesondere entlang einer Geraden parallel zu der ersten Koordinatenrichtung x, vorzugsweise parallel zur Fahrebene des Fahrzeugs.

In einem Schritt S05 werden die empfangenen reflektierten elektromagnetischen Signale 22 zum Bestimmen des Elevationswinkels des Objekts 14 basierend zumindest auf elektromagnetischen Phasenversätzen zwischen einer zweiten Auswahl aus den erfassten virtuellen Phasenzentren VZ ausgewertet. Bei der zweiten Auswahl kann es sich insbesondere, wie oben im Text beschrieben, um solche virtuellen Phasenzentren VZ handeln, entlang der zweiten Koordinatenrichtung y voneinander beabstandet sind, vorzugsweise senkrecht zu der Fahrebene und zu der Vorwärtsfahrtrichtung des Fahrzeugs. Die zweite Auswahl ist von der ersten Auswahl verschieden, wobei es einen nichtvollständigen Überlapp geben kann.

In einem Schritt S06 wird eine erste Deterministic-Maximum-Likelihood-Funktion, DML-Funktion, für eine erste Untermenge der ersten Auswahl aus den erfassten virtuellen Phasenzentren VZ berechnet. Die erste Untermenge besteht aus virtuellen Phasenzentren VZ, welche in dem virtuellen Array entlang einer ersten virtuellen Gerade parallel zu der ersten Koordinatenrichtung x angeordnet sind.

In einem Schritt S07 wird mindestens eine zweite DML-Funktion für eine zweite Untermenge der ersten Auswahl aus den erfassten virtuellen Phasenzentren VZ berechnet. Insbesondere wird für jede weitere Untermenge der ersten Auswahl, deren virtuelle Phasenzentren VZ jeweils entlang einer weiteren virtuellen Gerade parallel zu der ersten Koordinatenrichtung x angeordnet sind, jeweils eine eigene DML-Funktion berechnet.

In einem Schritt S08 wird eine DML-Summenfunktion durch gewichtetes Summieren der ersten DML-Funktion und der mindestens einen zweiten DML-Funktion berechnet. Das Auswerten S04 der empfangenen reflektierten elektromagnetischen Signale 22 zum Bestimmen des Azimutwinkels erfolgt basierend auf der DML-Summenfunktion. Insbesondere wird als der Azimutwinkel derjenige Winkel bestimmt, welchem die DML-Summenfunktion den höchsten Korrelationswert zuweist.

Ebenso kann auch für die zweite Auswahl der virtuellen Phasenzentren DZ mindestens eine dritte DML-Funktion berechnet werden, wobei bei dem Auswerten S05 der empfangenen reflektierten elektromagnetischen Signale 22 zum Bestimmen des Elevationswinkels derjenige Winkel als Elevationswinkel bestimmt wird, welchem die dritte DML-Funktion, oder eine weitere DML-Summenfunktion aus mehreren dritten DML-Funktionen, den höchsten Korrelationswert zuweist.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann ein bekannter Dejustagewinkel des erfindungsgemäßen Antennenarrays 10; 10', 10" berücksichtigt werden, um eine Elevationswinkelabhängigkeit der empfangenen elektromagnetischen Signale 22 der virtuellen Phasenzentren VZ für weit entfernt liegende Objekte 14 zu kompensieren, woraufhin eine DML-Funktion für mehrere Untermengen der ersten Auswahl, oder für alle virtuellen Phasenzentren VZ der ersten Auswahl, gemeinsam berechnet wird und als der Azimutwinkel der Winkel mit der höchsten Korrelation dieser gemeinsam berechneten DML-Funktion bestimmt wird.

Weiterhin sind auch andere als die gezeigten Anzahlen von Empfangsantennen und/oder Sendeantennen und von Patchelementen sowie andere als die gezeigten Abstände zwischen den Antennen untereinander möglich.

Statt an einem Fahrzeug kann die erfindungsgemäße MIMO-Radarvorrichtung auch stationär, beispielsweise an einer Brücke oder einer Säule, angebracht sein.

**Patentansprüche**

1. MIMO-Radarvorrichtung zum entkoppelten Bestimmen eines Elevationswinkels und eines Azimutwinkels eines Objekts mit:

   einem Antennenarray (10; 10'; 10") mit mehreren Sendeantennen (TX1, TX2, TX3; TX1, TX2', TX3; TX1", TX2, TX3"), deren Phasenzentren (TZ1, TZ2, TZ3; TZ1, TZ2', TZ3; TZ1", TZ2, TZ3") entlang einer ersten Koordinatenrichtung (x) voneinander beabstandet angeordnet sind; und
   mehreren Empfangsantennen (RX1, RX2, RX3, RX4; RX1, RX2, RX3', RX4), deren Phasenzentren (RZ1, RZ2, RZ3, RZ4; RZ1, RZ2, RZ3', RZ4) entlang der ersten Koordinatenrichtung (x) voneinander beabstandet angeordnet sind;
   wobei das jeweilige Phasenzentrum (TZ2; TZ2'; TZ2") zumindest einer der Sendeantennen (TX2; TX2'; TX2") von den jeweiligen Phasenzentren (TZ1, TZ3; TZ1", TZ3") der übrigen Sendeantennen (TX1, TX3; TX1", TX3") um einen Versatzwert (dZ12) entlang einer zweiten Koordinatenrichtung (y) beabstandet ist, welche senkrecht auf der ersten Koordinatenrichtung (x) steht;
   einer Auswerteeinrichtung (12), mittels welcher von den Sendeantennen (TX1, TX2, TX3; TX1, TX2', TX3; TX1", TX2, TX3") ausgesendete, von den Empfangsantennen (RX1, RX2, RX3, RX4; RX1, RX2', RX3', RX4) empfangene elektromagnetische Signale (22) zum entkoppelten Bestimmen des Elevationswinkels und des Azimutwinkels (ϑ) des Objekts (14) auswertbar sind;
   **dadurch gekennzeichnet, dass**
   das jeweilige Phasenzentrum (RZ2; RZ2, RZ3') zumindest einer der Empfangsantennen (RX2; RX2, RX3') von den jeweiligen Phasenzentren (RZ1, RZ3, RZ4; RZ1, RZ4) der übrigen Sendeantennen TX1, TX3; TX1", TX3") RX1, um den Versatzwert (dZ12) entlang der zweiten Koordinatenrichtung (y) beabstandet ist; und
das Phasenzentrum (RZ2; RZ2, RZ3') einer entlang der ersten Koordinatenrichtung (x) zwischen einer ersten und einer vierten Empfangsantenne (RX1, RX4; RX1, RX4) angeordneten zweiten Empfangsantenne (RX2; RX2) von den Phasenzentren (RZ1, RZ4) der ersten und der vierten Empfangsantenne (RX1, RX4) entlang der zweiten Koordinatenrichtung (y) um den Versatzwert (dZ12) beabstandet ist.

2. Vorrichtung nach Anspruch 1,
wobei jede der Sendeantennen (TX1, TX2, TX3; TX1, TX2', TX3; TX1", TX2, TX3") von jeder anderen der Sendeantennen (TX1, TX2, TX3; TX1, TX2', TX3; TX1", TX2, TX3") entlang der zweiten Koordinatenrichtung (y) entweder nicht oder um den Versatzwert (dZ12) beabstandet ist.

3. Vorrichtung nach einem der vorangehenden Ansprüche 1 oder 2,
wobei jede der Empfangsantennen (RX1, RX2, RX3, RX4; RX1, RX2, RX3', RX4) von jeder anderen der Empfangsantennen (RX1, RX2, RX3, RX4; RX1, RX2, RX3', RX4) entlang der zweiten Koordinatenrichtung (y) entweder nicht oder um den Versatzwert (dZ12) beabstandet ist.

4. Vorrichtung nach einem der vorangehenden Ansprüche 1 bis 3,
wobei das Phasenzentrum (TZ2; TZ2') einer entlang der ersten Koordinatenrichtung (x) zwischen einer ersten und einer dritten Sendeantenne (TX1, TX3; TX1", TX3") angeordneten zweiten Sendeantenne (TX2; TX2') von den Phasenzentren (TZ1, TZ3; TZ1", TZ3") der ersten und der dritten Sendeantenne (TX1, TX3; TX1", TX3") entlang der zweiten Koordinatenrichtung (y) um den Versatzwert (dZ12) beabstandet ist.

5. Vorrichtung nach Anspruch 1,
wobei das Phasenzentrum (RZ3') einer entlang der ersten Koordinatenrichtung (x) zwischen der zweiten und der vierten Empfangsantenne (RX2, RX4) angeordneten dritten Empfangsantenne (RX3') von den Phasenzentren (RZ1, RZ4) der ersten und der vierten Sendeantenne (RX1, RX4) entlang der zweiten Koordinatenrichtung (y) um den Versatzwert (dZ12) beabstandet ist

6. Vorrichtung nach einem der vorangehenden Ansprüche 1 bis 5,
wobei die Sendeantennen (TX1, TX2, TX3; TX1, TX2', TX3; TX1", TX2, TX3") und/oder die Empfangsantennen (RX1, RX2, RX3, RX4; RX1, RX2, RX3', RX4) als Patch-Antennen mit matrixartig angeordneten Spalten von Patchelementen (40) ausgebildet ist; wobei die Spalten entlang der zweiten Koordinatenrichtung (y) ausgerichtet sind und jeweils mehr Patchelemente (40) aufweisen als die entsprechende Patch-Antenne Spalten aufweist.

7. Vorrichtung nach Anspruch 6,
wobei zumindest eine der Sendeantennen und Empfangsantennen (TX1", TX3") eine größere Anzahl von Spalten von Patchelementen (14) aufweist als die übrigen Sendeantennen und Empfangsantennen (TX2, RX1, RX2, RX3, RX4).

8. Verfahren zum Betreiben einer MIMO-Radarvorrichtung nach einem der vorangehenden Ansprüche 1 bis 7, mit den Schritten:

Aussenden (S01) von elektromagnetischen Signalen (20) mittels der Sendeantennen (TX1, TX2, TX3; TX1, TX2', TX3; TX1", TX2, TX3");
Empfangen (S02) von an dem Objekt (14) reflektierten elektromagnetischen Signalen (22) mittels der Empfangsantennen (RX1, RX2, RX3, RX4; RX1, RX2, RX3', RX4);
Erfassen (S03) von virtuellen Phasenzentren (VZ) der empfangenen reflektierten elektromagnetischen Signale (22);
Auswerten (S04) der empfangenen reflektierten elektromagnetischen Signale (22) zum Bestimmen des Azimutwinkels des Objekts (14) basierend zumindest auf elektromagnetischen Phasenversätzen zwischen einer ersten Auswahl aus den erfassten virtuellen Phasenzentren (VZ); und
Auswerten (S05) der empfangenen reflektierten elektromagnetischen Signale (22) zum Bestimmen des Elevationswinkels des Objekts (14) basierend zumindest auf elektromagnetischen Phasenversätzen zwischen einer zweiten Auswahl aus den erfassten virtuellen Phasenzentren (VZ).

9. Verfahren nach Anspruch 8,

mit den Schritten:

Berechnen (S06) einer ersten Deterministic-Maximum-Likelihood-Funktion, DML-Funktion, für eine erste Untermenge der ersten Auswahl aus den erfassten virtuellen Phasenzentren (VZ);
Berechnen (S07) mindestens einer zweiten DML-Funktion für eine zweite Untermenge der ersten Auswahl aus den erfassten virtuellen Phasenzentren (VZ); und
Berechnen (S08) einer DML-Summenfunktion durch gewichtetes Summieren der ersten DML-Funktion und der mindestens einen zweiten DML-Funktion;

wobei das Auswerten (S04) der empfangenen reflektierten elektromagnetischen Signale (22) zum Bestimmen des Azimutwinkels basierend auf der DML-Summenfunktion erfolgt.

**Claims**

1. MIMO radar apparatus for determining an elevation angle and an azimuth angle of an object in a decoupled manner, having:

    an antenna array (10; 10'; 10") having

        a plurality of transmitting antennas (TX1, TX2, TX3; TX1, TX2', TX3; TX1", TX2, TX3"), the phase centres (TZ1, TZ2, TZ3; TZ1, TZ2', TZ3; TZ1", TZ2, TZ3") of which are arranged in a manner spaced from one another along a first coordinate direction (x); and
        a plurality of receiving antennas (RX1, RX2, RX3, RX4; RX1, RX2, RX3', RX4), the phase centres (RZ1, RZ2, RZ3, RZ4; RZ1, RZ2, RZ3', RZ4) of which are arranged in a manner spaced apart from one another along the first coordinate direction (x);

    wherein the respective phase centre (TZ2; TZ2'; TZ2") of at least one of the transmitting antennas (TX2; TX2'; TX2") is spaced apart from the respective phase centres (TZ1, TZ3; TZ1", TZ3") of the other transmitting antennas (TX1, TX3; TX1", TX3") by an offset value (dZ12) along a second coordinate direction (y) which is perpendicular to the first coordinate direction (x);
    an evaluation device (12) which can be used to evaluate electromagnetic signals (22), which are emitted by the transmitting antennas (TX1, TX2, TX3; TX1, TX2', TX3; TX1", TX2, TX3") and are received by the receiving antennas (RX1, RX2, RX3, RX4; RX1, RX2', RX3', RX4), in order to determine the elevation angle and the azimuth angle ($\vartheta$) of the object (14) in a decoupled manner;
    **characterized in that**
    the respective phase centre (RZ2; RZ2, RZ3') of at least one of the receiving antennas (RX2; RX2, RX3') is spaced apart from the respective phase centres (RZ1, RZ3, RZ4; RZ1, RZ4) of the other transmitting antennas (TX1, TX3; TX1", TX3") by the offset value (dZ12) along the second coordinate direction (y); and
    the phase centre (RZ2; RZ2, RZ3') of a second receiving antenna (RX2; RX2) arranged between a first receiving antenna and a fourth receiving antenna (RX1, RX4; RX1, RX4) along the first coordinate direction (x) is spaced apart from the phase centres (RZ1, RZ4) of the first and fourth receiving antennas (RX1, RX4) by the offset value (dZ12) along the second coordinate direction (y).

2. Apparatus according to Claim 1, wherein each of the transmitting antennas (TX1, TX2, TX3; TX1, TX2', TX3; TX1", TX2, TX3") is either not spaced apart or is spaced apart by the offset value (dZ12) from each other one of the transmitting antennas (TX1, TX2, TX3; TX1, TX2', TX3; TX1", TX2, TX3") along the second coordinate direction (y).

3. Apparatus according to either of the preceding Claims 1 and 2, wherein each of the receiving antennas (RX1, RX2, RX3, RX4; RX1, RX2, RX3', RX4) is either not spaced apart or is spaced apart by the offset value (dZ12) from each other one of the receiving antennas (RX1, RX2, RX3, RX4; RX1, RX2, RX3', RX4) along the second coordinate direction (y).

4. Apparatus according to one of the preceding Claims 1 to 3, wherein the phase centre (TZ2; TZ2') of a second transmitting antenna (TX2; TX2') arranged between a first transmitting antenna and a third transmitting antenna (TX1, TX3; TX1", TX3") along the first coordinate direction (x) is spaced apart from the phase centres (TZ1, TZ3; TZ1", TZ3") of the first and third transmitting antennas (TX1, TX3; TX1", TX3") by the offset value (dZ12) along the second coordinate direction (y).

5. Apparatus according to Claim 1, wherein the phase centre (RZ3') of a third receiving antenna (RX3') arranged between the second receiving antenna and the fourth receiving antenna (RX2, RX4) along the first coordinate direction (x) is spaced apart from the phase centres (RZ1, RZ4) of the first and fourth transmitting antennas (RX1, RX4) by the offset value (dZ12) along the second coordinate direction (y).

6. Apparatus according to one of the preceding Claims 1 to 5, wherein the transmitting antennas (TX1, TX2, TX3; TX1, TX2', TX3; TX1", TX2, TX3") and/or the receiving antennas (RX1, RX2, RX3, RX4; RX1, RX2, RX3', RX4) are in the form of patch antennas with columns of patch elements (40) arranged in a matrix-like manner, wherein the columns are oriented along the second coordinate direction (y) and each have more patch elements (40) than the corresponding patch antenna has columns.

7. Apparatus according to Claim 6,

wherein at least one of the transmitting antennas and receiving antennas (TX1", TX3") has a greater number of columns of patch elements (14) than the other transmitting antennas and receiving antennas (TX2, RX1, RX2, RX3, RX4).

8.  Method for operating a MIMO radar apparatus according to one of the preceding Claims 1 to 7, having the steps of:

emitting (S01) electromagnetic signals (20) by means of the transmitting antennas (TX1, TX2, TX3; TX1, TX2', TX3; TX1", TX2, TX3");
receiving (S02) electromagnetic signals (22) reflected at the object (14) by means of the receiving antennas (RX1, RX2, RX3, RX4; RX1, RX2, RX3', RX4);
capturing (S03) virtual phase centres (VZ) of the received reflected electromagnetic signals (22);
evaluating (S04) the received reflected electromagnetic signals (22) in order to determine the azimuth angle of the object (14) on the basis of at least electromagnetic phase offsets between a first selection of the captured virtual phase centres (VZ); and
evaluating (S05) the received reflected electromagnetic signals (22) in order to determine the elevation angle of the object (14) on the basis of at least electromagnetic phase offsets between a second selection of the captured virtual phase centres (VZ).

9.  Method according to Claim 8,

having the steps of:

calculating (S06) a first deterministic maximum likelihood function, DML function, for a first subset of the first selection of the captured virtual phase centres (VZ);
calculating (S07) at least one second DML function for a second subset of the first selection of the captured virtual phase centres (VZ); and
calculating (S08) a DML sum function by summing the first DML function and the at least one second DML function in a weighted manner;

wherein the received reflected electromagnetic signals (22) are evaluated (S04) for the purpose of determining the azimuth angle on the basis of the DML sum function.

**Revendications**

1.  Dispositif radar MIMO pour déterminer de façon découplée un angle d'élévation et un angle d'azimut d'un objet, comprenant :

un réseau d'antennes (10 ; 10' ; 10") comprenant
plusieurs antennes d'émission (TX1, TX2, TX3 ; TX1, TX2', TX3 ; TX1", TX2, TX3") dont les centres de phase (TZ1, TZ2, TZ3 ; TZ1, TZ2', TZ3 ; TZ1", TZ2, TZ3") sont disposés de manière espacée les uns des autres le long d'une première direction de coordonnées (x) ; et
plusieurs antennes de réception (RX1, RX2, RX3, RX4 ; RX1, RX2, RX3', RX4) dont les centres de phase (RZ1, RZ2, RZ3, RZ4; RZ1, RZ2, RZ3', RZ4) sont disposés de manière espacée les uns des autres le long de la première direction de coordonnées (x) ;
le centre de phase (TZ2 ; TZ2' ; TZ2") respectif d'au moins l'une des antennes d'émission (TX2 ; TX2' ; TX2") étant espacé des centres de phase (TZ1, TZ3 ; TZ1", TZ3") respectifs des autres antennes d'émission (TX1, TX3 ; TX1", TX3") d'une valeur de décalage (dZ12) le long d'une deuxième direction de coordonnées (y) qui est perpendiculaire à la première direction de coordonnées (x) ;
un dispositif d'évaluation (12) au moyen duquel des signaux électromagnétiques (22) émis par les antennes d'émission (TX1, TX2, TX3 ; TX1, TX2', TX3 ; TX1", TX2, TX3") et reçus par les antennes de réception (RX1, RX2, RX3, RX4 ; RX1, RX2', RX3', RX4) peuvent être évalués pour déterminer de manière découplée l'angle d'élévation et l'angle d'azimut (9) de l'objet (14) ;
**caractérisé en ce que**
le centre de phase (RZ2 ; RZ2, RZ3') respectif au moins d'une des antennes de réception (RX2 ; RX2, RX3') est espacé des centres de phase (RZ1, RZ3, RZ4 ; RZ1, RZ4) respectifs des autres antennes d'émission (TX1, TX3 ; TX1", TX3") de la valeur de décalage (dZ12) le long de la deuxième direction de coordonnées (y) ; et
le centre de phase (RZ2; RZ2, RZ3') d'une deuxième antenne de réception (RX2 ; RX2) disposée le long de la première direction de coordonnées (x) entre une première et une quatrième antenne de réception (RX1, RX4 ; RX1, RX4) est espacé des centres de phase (RZ1, RZ4) de la première et de la quatrième antenne de réception (RX1, RX4) le long de la deuxième direction de coordonnées (y) de la valeur de décalage (dZ12).

2.  Dispositif selon la revendication 1, dans lequel chacune des antennes d'émission (TX1, TX2, TX3 ; TX1, TX2', TX3; TX1", TX2, TX3") n'est pas espacée de chaque autre des antennes d'émission (TX1, TX2, TX3 ; TX1, TX2', TX3 ; TX1", TX2, TX3") le long de la deuxième direction de coordonnées (y) ou est espacée de la valeur de décalage (dZ12).

3. Dispositif selon l'une quelconque des revendications précédentes 1 et 2, dans lequel chacune des antennes de réception (RX1, RX2, RX3, RX4 ; RX1, RX2, RX3', RX4) n'est pas espacée de chaque autre des antennes de réception (RX1, RX2, RX3, RX4 ; RX1, RX2, RX3', RX4) le long de la deuxième direction de coordonnées (y) ou est espacée de la valeur de décalage (dZ12) .

4. Dispositif selon l'une quelconque des revendications précédentes 1 à 3, dans lequel le centre de phase (TZ2 ; TZ2') d'une deuxième antenne d'émission (TX2 ; TX2') disposée le long de la première direction de coordonnées (x) entre une première et une troisième antenne d'émission (TX1, TX3 ; TX1", TX3") est espacé des centres de phase (TZ1, TZ3 ; TZ1", TZ3") de la première et de la troisième antenne d'émission (TX1, TX3 ; TX1", TX3") le long de la deuxième direction de coordonnées (y) de la valeur de décalage (dZ12).

5. Dispositif selon la revendication 1, dans lequel le centre de phase (RZ3') d'une troisième antenne de réception (RX3') disposée le long de la première direction de coordonnées (x) entre la deuxième et la quatrième antenne de réception (RX2, RX4) est espacé des centres de phase (RZ1, RZ4) de la première et de la quatrième antenne d'émission (RX1, RX4) le long de la deuxième direction de coordonnées (y) de la valeur de décalage (dZ12).

6. Dispositif selon l'une quelconque des revendications précédentes 1 à 5, dans lequel les antennes d'émission (TX1, TX2, TX3 ; TX1, TX2', TX3 ; TX1", TX2, TX3") et/ou les antennes de réception (RX1, RX2, RX3, RX4 ; RX1, RX2, RX3', RX4) sont réalisées sous forme d'antennes à plaque dotées de colonnes d'éléments à plaque (40) disposées en matrice ; les colonnes étant alignées le long de la deuxième direction de coordonnées (y) et présentant respectivement plus d'éléments à plaque (40) que l'antenne à plaque correspondante de colonnes.

7. Dispositif selon la revendication 6, dans lequel au moins l'une des antennes d'émission et des antennes de réception (TX1", TX3") présente un plus grand nombre de colonnes d'éléments à plaque (14) que les autres antennes d'émission et antennes de réception (TX2, RX1, RX2, RX3, RX4).

8. Procédé permettant de faire fonctionner un dispositif radar MIMO selon l'une quelconque des revendications précédentes 1 à 7, comprenant les étapes consistant à :

émettre (S01) des signaux électromagnétiques (20) au moyen des antennes d'émission (TX1, TX2, TX3 ; TX1, TX2', TX3 ; TX1", TX2, TX3") ;
recevoir (S02) des signaux électromagnétiques (22) réfléchis par l'objet (14) au moyen des antennes de réception (RX1, RX2, RX3, RX4 ; RX1, RX2, RX3 ' , RX4) ;
détecter (S03) des centres de phase (VZ) virtuels des signaux électromagnétiques réfléchis (22) ;
évaluer (S04) les signaux électromagnétiques réfléchis (22) reçus pour déterminer l'angle d'azimut de l'objet (14) sur la base au moins de déphasages électromagnétiques entre une première sélection parmi les centres de phase virtuels (VZ) détectés ; et
évaluer (S05) les signaux électromagnétiques réfléchis (22) reçus pour déterminer l'angle d'élévation de l'objet (14) sur la base au moins de déphasages électromagnétiques entre une deuxième sélection parmi les centres de phase virtuels (VZ) détectés.

9. Procédé selon la revendication 8, comprenant les étapes consistant à :

calculer (S06) une première fonction de probabilité maximale déterministe, une fonction DML, pour un premier sous-ensemble de la première sélection parmi les centres de phase virtuels (VZ) détectés ;
calculer (S07) au moins une deuxième fonction DML pour un deuxième sous-ensemble de la première sélection parmi les centres de phase virtuels (VZ) détectés ; et
calculer (S08) une fonction de somme DML par une sommation pondérée de la première fonction DML et de ladite au moins une deuxième fonction DML ;
l'évaluation (S04) des signaux électromagnétiques réfléchis (22) reçus pour déterminer l'angle d'azimut étant effectuée sur la base de la fonction de somme DML.

Fig. 1

Fig. 2A

Fig. 2B

10'

40

RZ2

40

RZ3'

TZ2'

TZ1

TZ3

RZ1

dZ12

RZ4

40
40
40

TX1
dT12'
TX2'
dT23'
TX3
dTR
RX1
dR12
RX2
dR23
RX3'
dR34
RX4

y

x

Fig. 3A

VZ31'    VZ32'

VZ21'                    VZ25'    VZ26'    } VMA3'

VZ13'                } VMA2'

VZ12'  VZ13'    VZ24'

VZ11                VZ12'                VZ14'    } VMA1'

y

x

Fig. 3B

Fig. 4

EP 3 198 678 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012256795 A1
- WO 2013034282 A1
- DE 102011084610 A1
- EP 2315311 A1
- EP 0947852 A1
- JP 2010008319 A